# FASCICULE DE BREVET EUROPEEN

(11) **EP 3 672 105 B1**
(45) Date de publication et mention de la délivrance du brevet: **27.07.2022**
(21) Numéro de dépôt: 19217093.4
(22) Date de dépôt: 17.12.2019
(51) Int. Cl.: H04B 7/185, H04B 7/204

(54) **PROCÉDÉ D'ACCÈS MULTIPLE NON ORTHOGONAL POUR TRANSMISSION SATELLITES**
VERFAHREN ZUM NICHT ORTHOGONALEN MEHRFACHZUGRIFF FÜR SATELLITENÜBERTRAGUNG
METHOD FOR NON-ORTHOGONAL MULTIPLE ACCESS FOR SATELLITE TRANSMISSION

(30) Priorité: 20.12.2018 FR 1873571
(43) Date de publication de la demande: 24.06.2020
(73) Titulaire: Thales, 92400 Courbevoie (FR)
(72) Inventeur: TOURET, Marc, 92622 Gennevilliers (FR); DELATTRE, Michel, 92622 Gennevilliers (FR); CHEVALLIER, Michel, 92622 Gennevilliers (FR)
(74) Mandataire: Marks & Clerk France

(56) Documents cités:
- US-A1- 2016 373 278
- LIN-NAN LEE ET AL: "Scrambled Code Multiple Access waveform for micro satellite terminals", MILITARY COMMUNICATIONS CONFERENCE, 2012 - MILCOM 2012, IEEE, 29 octobre 2012 (2012-10-29), pages 1-6, XP032315494, DOI: 10.1109/MILCOM.2012.6415683 ISBN: 978-1-4673-1729-0
- XIAOJUAN YAN ET AL: "Performance Analysis of NOMA-Based Land Mobile Satellite Networks", IEEE ACCESS, vol. 6, 7 juin 2018 (2018-06-07), pages 31327-31339, XP055637812, DOI: 10.1109/ACCESS.2018.2844783

## Description

### Domaine technique :

L'invention se situe dans le domaine des communications satellites. Plus précisément, elle vise à définir un procédé pour la transmission discrète de communications par satellite.

### Technique antérieure :

La position d'un équipement de transmission peut être facilement déterminée en observant les paramètres de ses transmissions. Ainsi, pour éviter la localisation de cet équipement, il peut être souhaité de transmettre les données de manière discrète. Cela s'applique au domaine des communications par satellite, par exemple dans le domaine de la sécurité civile pour les émissions réalisées par des porteurs, comme des avions de reconnaissance, des intervenants de forces de l'ordre, etc. De tels équipements utilisent souvent des techniques d'émission apportant des capacités d'anti-interférence et d'antibrouillage, comme l'évasion de fréquence (en anglais *Frequency Hopping*), ou des techniques de transmission discrètes basées sur de l'étalement de spectre. Par exemple, l'évasion de fréquence est normalisée par I'OTAN (acronyme pour Organisation du Traité de l'Atlantique Nord) dans le cadre des transmissions satellites du STANAG 4606 (acronyme anglais pour *Standardisation Agreement,* ou accords de normalisation). Un but de l'invention est alors de proposer un procédé de transmission par satellite d'un signal qui soit discret et compatible avec des mécanismes d'évasion de fréquence et/ou d'étalement de spectre.

Les porteurs considérés, dont la discrétion est recherchée, disposent généralement d'antennes satellites de petite taille (typiquement des diamètres de l'ordre de quelques dizaines de cm), par opposition avec les stations satellitaires, qui peuvent disposer d'antennes de grande taille (typiquement d'un diamètre supérieur ou égal à quelques mètres). En communications satellites, des recommandations bien précises d'occupation spectrale doivent être tenues. Plus l'antenne de la station émettrice est petite, plus il est difficile de concentrer le faisceau, et donc plus le signal doit être étalé en bande afin de respecter les règlementations en vigueur (recommandation ITU-524-9). Un autre but de l'invention est alors de proposer un procédé d'émission dans un système satellitaire qui soit adapté à l'optimisation des ressources satellites par l'utilisation de porteurs ayant une petite antenne.

Certains des porteurs peuvent avoir une forte mobilité, comme par exemple un bateau de surveillance maritime ou un hélicoptère. Un autre but de l'invention est alors de proposer un procédé d'émission dans un système satellitaire qui soit adapté à de tels porteurs.

A l'instar du monde des télécommunications terrestres, les techniques d'accès radio du monde des communications satellites se basent dans leur immense majorité sur des techniques d'accès multiples dites orthogonales. Le principe de ces techniques est que plusieurs émetteurs se partagent une même ressource de manière orthogonale. Les plus utilisées sont le FDMA (sigle anglais pour *Frequency Duplex Multiple Access,* ou accès multiple par répartition en fréquence), où les utilisateurs partagent la ressource fréquentielle, le TDMA (sigle anglais pour *Time Duplex Multiple Access,* ou accès multiple par répartition dans le temps), où les utilisateurs partagent la ressource temporelle, ou le CDMA (signal anglais pour *Code Duplex Multiple Access,* ou accès multiple par répartition en code), qui utilise l'étalement de spectre à partir de codes orthogonaux pour différentier les transmissions des utilisateurs. Lorsque des techniques TDMA ou FDMA sont utilisées, chaque équipement dispose d'un intervalle temporel ou d'une bande de fréquence qui lui est spécifiquement dédiée. De telles communications sont alors peu discrètes. La réception de chaque signal est simplifiée par l'orthogonalité, et ne nécessite aucune ou peu d'informations relatives aux autres émetteurs, mais cette simplicité de réception cache en fait une complexité introduite sur le partage de la ressource et la synchronisation des équipements du réseau. Un émetteur entrant dans le réseau doit d'abord se synchroniser avec les autres équipements du réseau, faire part de son besoin d'émettre, se voir attribuer des ressources temporelles et/ou fréquentielles, et attendre la disponibilité de ces ressources. Le temps d'accès aux ressources radio est alors important, en particulier pour les équipements ayant de faibles besoins de transmission. En outre, la synchronisation entre les équipements peut prendre du temps et être de faible qualité lorsque les conditions de propagation sont peu favorables ou que le terminal est très mobile. Pour ce qui est du CDMA, l'orthogonalité des codes requiert une synchronisation très fine entre équipements, ce qui entraine également des temps d'accès importants aux ressources radio. Enfin, l'orthogonalité entre les équipements n'est pas gérée pour des équipements appartenant à des réseaux satellitaires différents. Ces techniques ne répondent donc pas au besoin posé. Un autre besoin est alors d'améliorer les temps d'accès aux ressources radio en limitant les échanges de signalisation avec les porteurs dont la discrétion est recherchée.

Il est connu de la demande de brevet US 2016/0373278 A1 une technique d'accès multiple dite SCMA (sigle anglais pour *Scrambled Coded Multiple Access,* ou accès multiple par codage brouillé).

Il est connu, par exemple du brevet US 5596439A, un procédé dit de PCMA (signal anglais pour *Paired Carrier Multiple Access,* ou accès multiple par paires de porteuses), dans lequel des communications satellites sont passées entre deux équipements A et B appartenant à un même spot satellitaire transmettant les signaux *xₐ* et *x_{b}* en utilisant les mêmes ressources temporelles et fréquentielles. Après retransmission par le satellite, les deux équipements reçoivent le signal *x_{c} = xₐ* + *x_{b}*. Chaque équipement est en mesure, en soustrayant le signal qu'il a envoyé, de retrouver le signal transmis par l'autre équipement. Un tel procédé pourrait être utilisé pour effectuer des transmissions discrètes, mais présenterait plusieurs défauts : la nécessité d'une synchronisation très précise dont la mise en œuvre augmenterait le temps d'accès aux ressources radio, et les problèmes de gestion de la mobilité. En outre, il ne s'appliquerait qu'à deux équipements en connectivité directe (c'est-à-dire situés dans le même spot satellitaire). Le PCMA n'est donc pas une solution à l'ensemble des problèmes posés.

### Résumé de l'invention :

L'invention vise à assurer la transmission discrète d'un signal dans un réseau satellitaire. Pour ceci, elle propose un procédé d'émission non-orthogonal dans lequel un signal à transmettre discrètement est émis de manière à être couvert par un signal de plus forte puissance n'ayant pas de contrainte de discrétion, par multiplexage en puissance.

NOMA (acronyme anglais pour *Non Orthogonal Multiple Access,* ou accès multiple non orthogonal) est une technique d'accès réseau issue des normes 5G et utilisée dans le cadre de l'internet des objets. Cette technique est décrite par exemple dans Anas Benjebbour, « An overview of Non-Orthogonal Multiple Access », 6 Juin 2017.

La technique d'accès réseau NOMA vise à augmenter l'efficacité spectrale d'un réseau de communications terrestres en multiplexant des paires d'utilisateurs dans le plan des puissances. La bonne réception de chacun de ces signaux nécessite la mise en œuvre, du côté du récepteur, d'un algorithme de séparation des sources dit algorithme de SIC (signal anglais pour *Successive Interference Cancellation,* ou suppression d'interférences successives).

Pour ceci, un planificateur de ressources (en anglais *scheduler*) identifie des paires d'utilisateurs dont les transmissions peuvent être multiplexées en puissance, et assigne aux équipements constituant ces paires des niveaux de puissance d'émission suffisamment différents pour qu'un récepteur puisse séparer les signaux transmis par chacun des équipements. A la réception, un procédé de SIC est implémenté pour séparer les signaux.

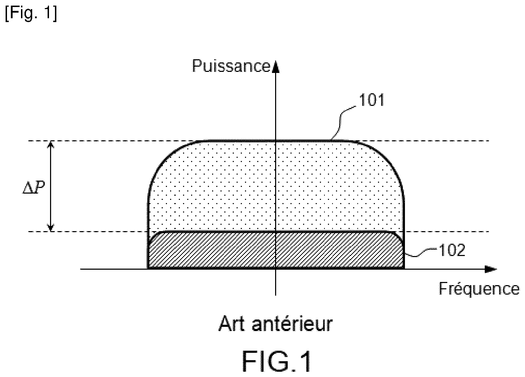

La figure 1 représente le multiplexage en puissance de deux signaux *xₐ* (référence 101) et *x_{b}* (référence 102) émis par une paire d'équipements A et B, les signaux ayant des niveaux de puissance d'émission respectifs *Pₐ* et *P_{b},* avec *Pₐ > P_{b}*. Le SIC implémenté dans une station de base recevant le signal *y* = *hₐxₐ* + *h_{b}x_{b}* , *hₐ* et *h_{b}* représentant le canal de propagation associé respectivement au signal *xₐ* et *x_{b},* consiste à d'abord démoduler le signal *xₐ* de plus fort niveau de puissance comme s'il était transmis isolément, puis à reconstituer une estimée *x̃ₐ* du signal *hₐxₐ.* En calculant *y* - *x̃ₐ,* la station de base reconstitue une estimée *x̃_{b}* du signal *h_{b}x_{b}* seul, qui sera à son tour démodulé. Ce procédé peut être étendu à *N* signaux, *N* étant un entier.

Au niveau d'une paire d'équipements, l'accès multiple de NOMA est non orthogonal puisque les paires d'émissions ne sont multiplexés ni en temps, ni en fréquence ni en code. Il conserve néanmoins une nécessité de coordination, puisque les différentes paires d'émetteurs sont multiplexées entre elles, en temps et/ou en fréquence. Ainsi, les équipements doivent être synchronisés entre eux, ce qui augmente le temps d'accès aux ressources radio. Enfin, des largeurs de bandes identiques sont attribuées aux émetteurs d'une même paire, ce qui est une contrainte supplémentaire imposée sur les émissions.

Le procédé de transmission satellite revendiqué par l'invention s'inspire de la technique d'accès NOMA, bien que la finalité recherchée par NOMA et l'environnement opérationnel soient très différents. Pour ceci, l'invention décrit un procédé de transmission d'un signal discret dans un système de communications comprenant un satellite, au moins un premier équipement de transmission à travers un lien de communication impliquant le satellite, et un contrôleur de transmission configuré pour échanger des données de signalisation avec le au moins un premier équipement de transmission. Le réseau satellitaire comprend également un deuxième équipement de transmission configuré pour émettre le signal discret à destination d'un troisième équipement de transmission à travers un lien de communication impliquant le satellite. Un allocateur de ressources radio est configuré pour allouer des ressources radio comprenant une bande de fréquence et un niveau de puissance d'émission aux premiers équipements de transmission par l'intermédiaire du contrôleur de transmission. Le procédé selon l'invention comprend :
- une première étape de collecte, par l'allocateur de ressources radio, d'informations relatives à une qualité des signaux reçus par le troisième équipement de transmission sur un ou plusieurs liens de communication impliquant le satellite,
- une deuxième étape de notification d'un besoin de transmission du signal discret à l'allocateur de ressources radio,
- une troisième étape d'identification, par l'allocateur de ressources radio, d'au moins une première bande de fréquence adaptée pour la transmission du signal discret par multiplexage en puissance avec au moins un signal transmis par un premier équipement de transmission dans la première bande de fréquence, et de calcul d'un niveau de puissance d'émission associé, l'identification étant faite à partir des bandes de fréquences allouées aux premiers équipements de transmission et des informations collectées durant la première étape du procédé, et
- une quatrième étape de transmission, par l'allocateur de ressources radio à travers un lien de communication impliquant le satellite, de chaque première bande de fréquence et niveau de puissance associé identifiés lors de la troisième étape du procédé au deuxième équipement de transmission et au troisième équipement de transmission.

Dans un mode de réalisation, le contrôleur de transmission échange des données de signalisation avec le deuxième équipement et le troisième équipement. Dans un autre mode de réalisation, le contrôleur de transmission et le (ou les) premier équipement appartiennent à un premier réseau satellitaire, tandis que le deuxième équipement de transmission et le troisième équipement de transmission appartiennent à un deuxième réseau satellitaire comprenant un contrôleur de transmission configuré pour échanger des données de signalisation avec le deuxième équipement de transmission et le troisième équipement de transmission, et pour communiquer avec l'allocateur de ressources radio.

Dans un mode de réalisation, le procédé de transmission d'un signal discret selon l'invention comprend en outre une cinquième étape d'émission du signal discret, par le deuxième équipement de transmission à travers un lien de communication impliquant le satellite, en utilisant une première bande de fréquence et un niveau de puissance d'émission transmis lors de la quatrième étape.

Elle peut être suivie d'une sixième étape de réception du signal discret par le troisième équipement dans une bande de fréquence comprenant la bande de fréquence utilisée lors de la cinquième étape, et de récupération du signal discret par la mise en œuvre d'un algorithme de suppression d'interférences successives.

Dans un mode de réalisation, le niveau de puissance d'émission du signal discret dans une première bande de fréquence donnée calculé lors de la troisième étape est choisi de manière à ce qu'un écart entre la densité de puissance d'un signal transmis par chaque premier équipement utilisant la première bande de fréquence et la densité de puissance du signal discret permette au troisième équipement de transmission de mettre en œuvre d'un algorithme de suppression d'interférences successives lors de la sixième étape du procédé. Cet écart minimum peut être estimé théoriquement en fonction des paramètres de transmission des deux signaux. Dans un mode de réalisation, le niveau de puissance d'émission du signal discret dans une première bande de fréquence donnée est également calculé de manière à ce que le niveau de puissance du signal discret reçu par le troisième équipement après suppression du signal transmis par le premier équipement permette de le démoduler et de le décoder avec un taux d'erreurs résiduel acceptable.

Dans un mode de réalisation, l'allocateur de ressources radio reçoit des mesures de qualité des signaux reçus par les différents équipements, et les supervise de manière à ajuster les paramètres de transmission de tous les acteurs. Pour ceci, le procédé de transmission d'un signal discret selon ce mode de réalisation de l'invention comprend en outre une septième étape de :
- collecte, par l'allocateur de ressources radio, d'informations relatives à une qualité du signal discret reçu par le troisième équipement de transmission,
- réitération du procédé de transmission à partir de la troisième étape (303) en prenant en compte lesdites informations relatives à une qualité du signal discret reçu.

La septième étape peut en outre comprendre la collecte, par l'allocateur de ressources radio, d'informations relatives à la qualité des signaux conventionnels reçus par le troisième équipement, et/ou d'informations relatives à la qualité des signaux conventionnels reçus par les premiers équipements, et de prise en compte de ces informations lors de la réitération de la troisième étape du procédé.

Avantageusement, la troisième étape du procédé selon l'invention comprend l'ajustement de la bande de fréquence attribuée à au moins un premier équipement en fonction de la largeur de la première bande de fréquence, ou/et l'ajustement du niveau de puissance d'émission attribuée à au moins un premier équipement pour émettre dans une première bande de fréquence.

Avantageusement, le deuxième équipement de transmission est configuré pour mettre en œuvre un mécanisme de saut de fréquence parmi une ou plusieurs des premières bandes de fréquences.

Avantageusement, le deuxième équipement de transmission et l'allocateur de ressources radio font partie d'un réseau multicouches suivant une architecture OSIMM par lequel le deuxième équipement de transmission notifie l'allocateur de ressources de son besoin de transmission du signal discret lors de la deuxième étape du procédé.

L'invention porte également sur un allocateur de ressources radio configuré pour mettre en œuvre les quatre premières étapes d'un procédé de transmission d'un signal discret selon un mode de réalisation de l'invention, ainsi que sur un dispositif de réception du signal discret. Ce dispositif est configuré pour :
- transmettre, à un allocateur de ressources tel que décrit précédemment, des informations relatives à une qualité des signaux reçus sur au moins un lien de communication impliquant le satellite,
- recevoir, depuis l'allocateur de ressources radio mettant en œuvre les quatre première étapes d'un procédé selon un mode de réalisation de l'invention, au moins une première bande de fréquence et un niveau de puissance associé relatif à la transmission dudit signal discret,
- acquérir un signal radio dans une bande de fréquence comprenant ladite première bande de fréquence, et
- mettre en œuvre un algorithme de suppression d'interférences successives sur le signal radio afin de récupérer ledit signal discret.

Enfin, l'invention porte sur l'ensemble d'un réseau satellitaire comprenant un allocateur de ressources radio tel que défini au paragraphe précédent et plusieurs équipements de transmission satellitaires, dont un équipement configuré pour émettre un signal discret selon des paramètres transmis par l'allocateur de ressources radio, et au moins un équipement configuré pour recevoir le signal discret tel que décrit au paragraphe précédent.

### Brève description des figures :

L'invention sera mieux comprise et d'autres caractéristiques et avantages apparaîtront mieux à la lecture de la description qui suit, donnée à titre non limitatif, et grâce aux figures annexées parmi lesquelles :
[Fig. 1] la figure 1 représente un multiplexage de signaux en puissance, connu de l'état de l'art pour les transmissions NOMA,
[Fig. 2a] la figure 2a représente un environnement opérationnel dans lequel peut être mis en œuvre un mode de réalisation du procédé selon l'invention,
[Fig. 2b] la figure 2b représente un environnement opérationnel dans lequel peut être mis en œuvre un mode de réalisation du procédé selon l'invention,
[Fig. 3] la figure 3 représente les étapes nécessaires à la mise en œuvre du procédé de transmission discrète d'un signal selon un mode de réalisation du procédé selon l'invention,
[Fig. 4a] la figure 4a représente, à titre d'exemple, une bande de fréquence adaptée à la transmission discrète d'un signal selon un mode de réalisation du procédé selon l'invention,
[Fig. 4b] la figure 4b représente, à titre d'exemple, une bande de fréquence adaptée à la transmission discrète d'un signal selon un mode de réalisation du procédé selon l'invention,
[Fig. 4c] la figure 4c représente, à titre d'exemple, une bande de fréquence adaptée à la transmission discrète d'un signal selon un mode de réalisation du procédé selon l'invention,
[Fig. 5] la figure 5 décrit la mise en œuvre d'un algorithme de suppression d'interférences successives permettant de reconstituer un signal transmis selon un mode de réalisation du procédé selon l'invention,
[Fig. 6] la figure 6 représente les différentes strates d'une architecture adaptée à la mise en œuvre d'un mode de réalisation du procédé selon l'invention,
[Fig. 7] la figure 7 représente un diagramme des échanges réalisés dans le plan de contrôle entre les différents acteurs afin de permettre la mise à jour des paramètres de transmission des différents équipements dans un mode de réalisation de l'invention.

Par la suite, lorsque des mêmes références sont utilisées dans des figures, elles désignent les mêmes éléments.

### Description détaillée :

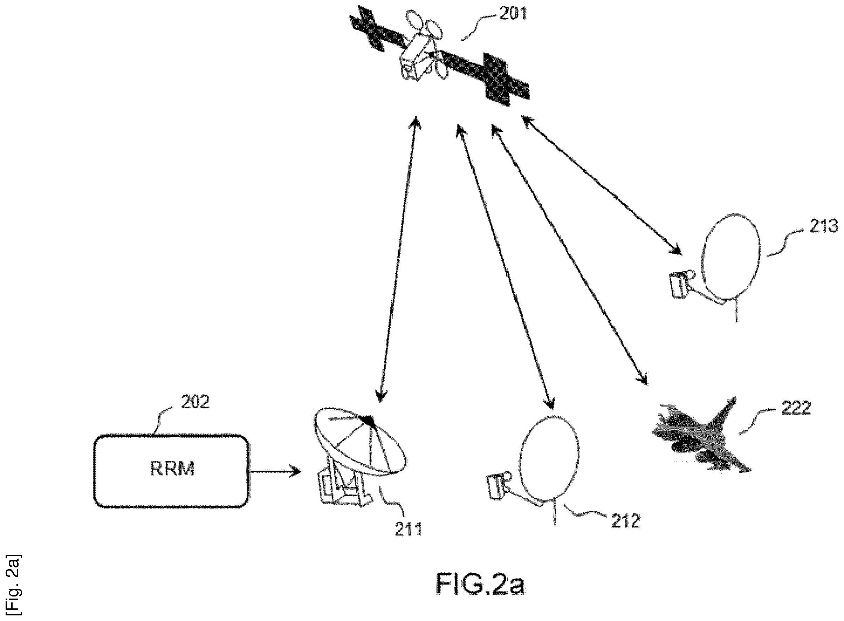

La figure 2a représente un environnement opérationnel dans lequel peut être mis en œuvre un mode de réalisation du procédé selon l'invention, à savoir un réseau satellitaire comprenant un satellite 201, au moins un équipement de transmission 212 et 213 transmettant des données à travers des liaisons satellites relayées par le satellite 201, un contrôleur de transmission 211, en charge de diffuser des informations de transmission aux équipements du réseau tel que les équipements 212 et 213. Les équipements 212 et 213 peuvent être indifféremment des terminaux portatifs, généralement équipés d'antennes de petit diamètre, ou des stations sols ayant des antennes plus grandes pouvant atteindre plusieurs mètres de diamètre. Le contrôleur de transmission et les équipements 212 et 213 échangent des données de signalisation, comme des données de configuration des transmissions et des informations sur la qualité du signal reçu auprès de chacun des équipements. Le cas échéant, le contrôleur de transmission peut également être un acteur impliqué dans les transmissions, et ainsi échanger des données utiles avec les autres équipements en plus des données de signalisation. Le satellite 201 est configuré pour relayer les communications vers les équipements satellitaires concernés, qu'ils soient ou non dans le même spot. Par la suite, pour des raisons de simplicité, on utilisera le terme de terminaux pour les équipements de transmission 212, 213 et le contrôleur de transmission 211 lorsqu'il transmet des données autres que des données de signalisation, bien que ces équipements puissent prendre une autre forme que celle d'un terminal satellitaire. On parlera également de transmissions « conventionnelles » pour désigner les signaux utiles émis par le contrôleur de transmission 211 et/ou les terminaux 212/213 sans contrainte particulière de discrétion.

Les terminaux peuvent indifféremment être en connexité directe, c'est-à-dire que tous les terminaux peuvent émettre à destination du contrôleur de transmission 211 et des autres terminaux 212 et 213, ou en connexité croisée, c'est-à-dire que les terminaux ne peuvent émettre qu'à destination du contrôleur de transmission 211.

Les standards de communications utilisés pour les liaisons entre le contrôleur de transmission 211 et les terminaux 212/213 n'influent pas sur la mise en œuvre du procédé selon l'invention. N'importe quel standard de communication satellitaire peut être utilisé, comme par exemple le standard DVB-S (acronyme anglais pour *Digital Video Broadcast* - *Satellite,* ou diffusion vidéo numérique par satellite), DVB-S2 (2^{ème} version du standard DVB-S), Iridium, Inmarsat, etc...

Un allocateur de ressources radio 202 (en anglais *Radio Ressource Manager,* ou RRM) est en charge de la répartition des ressources satellitaire du satellite 201 allouées au contrôleur de transmission 211 et aux terminaux 212/213. Il attribue pour ceci à chaque équipement, par l'intermédiaire du contrôleur de transmission 211, une bande de fréquence, une puissance d'émission, ainsi qu'un créneau temporel lorsque les différents équipements sont multiplexés temporellement, et le cas échéant un schéma de modulation, codage et d'étalement. Il veille par ailleurs à ce que les signaux émis respectent les recommandations applicables en vigueur (comme les standards d'émissions satellites ITU S.524-9, ETSI 101 136, FCC 25.218, ...). Ce fonctionnement est le fonctionnement habituel d'un réseau satellitaire tel que connu de l'état de la technique.

Un but de l'invention est de permettre à un porteur 222 de transmettre un signal par une liaison satellitaire impliquant le satellite 201 avec discrétion. Les transmissions du porteur 222 peuvent être à destination de n'importe quel équipement du réseau, tel que les terminaux 212 et 213 ou le contrôleur de transmission 211 lorsqu'il est impliqué dans la transmission de données utiles. Afin d'atteindre l'objectif de discrétion, l'invention consiste à transmettre les signaux du porteur 222 sous le niveau des signaux conventionnels transmis par les équipements 211, 212 et 213, par un multiplexage en puissance non-orthogonal. Dans ce mode de réalisation, le porteur 222 fait partie du système de transmission géré par le contrôleur de transmission 211, par lequel lui sont transmises les ressources attribuées par l'allocateur de ressources radio 202.

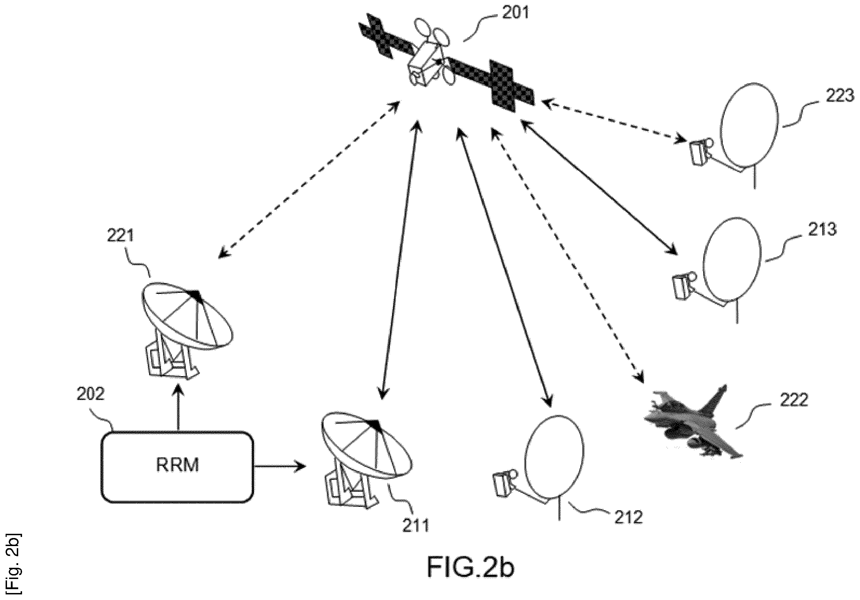

La figure 2b représente un environnement opérationnel dans lequel peut être mis en œuvre un autre mode de réalisation du procédé selon l'invention. Cet environnement comprend les mêmes équipements que ceux de la figure 2a, à savoir un satellite 201, un allocateur de ressources radio 202, un contrôleur de transmission 211 et des terminaux 212 et 213. Le contrôleur de transmission 211 et les terminaux 212 et 213 forment un premier système de transmission par satellite, piloté par l'allocateur de ressources radio 202. Contrairement au mode de réalisation de la figure 2a, le porteur n'appartient pas au premier système de transmission, mais à un deuxième système de transmission indépendant, comprenant un contrôleur de transmission 221, configuré pour échanger des données de signalisation avec le porteur 222, et au moins un équipement de transmission 223 destinataire des signaux transmis par le porteur. L'équipement de transmission 223 et le contrôleur de transmission peuvent former un unique équipement. De même, le deuxième réseau de transmission peut comprendre plusieurs terminaux destinataires du signal discret transmis par le porteur 222. L'allocateur de ressources radio 202 attribue par l'intermédiaire du contrôleur de transmission 221 les bandes de fréquences et niveaux de puissance devant être utilisées par le porteur 222, et par le terminal 223 lorsque ce dernier a des données à transmettre, le terminal 223 ne recherchant pas nécessairement à émettre discrètement.

Le procédé selon l'invention ne se limite pas à une implémentation dans les deux modes opérationnels décrits aux figures 2a et 2b à titre d'illustration. Il peut par exemple être implémenté dans un réseau satellitaire comprenant plusieurs premiers systèmes de transmission tels que celui formé par le contrôleur 211 et les équipements 212 et 213, à condition que les ressources satellitaires soient attribuées par un même allocateur de ressources 202. Il peut également être étendu à la transmission de plusieurs signaux discrets émis par des porteurs différents.

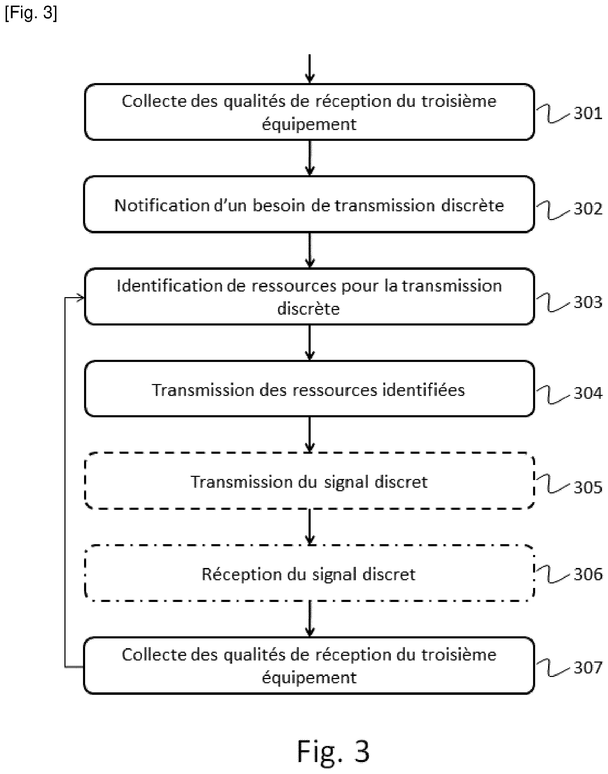

La figure 3 représente les étapes nécessaires à la mise en œuvre d'un mode de réalisation du procédé de transmission d'un signal discret depuis le porteur 222 selon l'invention, que ce soit dans un mode de réalisation comme celui de la figure 2a dans lequel le porteur 222 appartient au système de transmission utilisé pour dissimuler ses transmission, ou dans un mode de réalisation comme celui de la figure 2b dans lequel le porteur 222 appartient à un système de transmission autre que celui utilisé pour dissimuler ses transmission.

Le procédé est de préférence mis en œuvre avant que le porteur 222 n'émette le souhait d'entrer dans le réseau, afin de limiter au maximum le temps requis entre le moment où un besoin de transmission discrète est notifié, et le moment où la transmission discrète du signal est possible.

Il comprend une première étape 301 de collecte, par le ou les contrôleurs de transmission, d'informations relatives à la qualité des signaux conventionnels reçus par les différents équipements du réseau, et en particulier par l'équipement destinataire du signal discret (213 dans le cas de la figure 2a, 223 dans le cas de la figure 2b), lorsque l'identité de ce destinataire est connue. Ces informations sont par exemple des mesures de rapport signal à bruit, des mesures de puissance et/ou des mesures de taux d'erreur. Ces informations sont transmises par le ou les contrôleurs de transmission à l'allocateur de ressources radio 202. Elles lui permettent d'estimer, pour les liaisons conventionnelles, une marge entre la qualité des signaux reçus et la qualité théorique nécessaire à la bonne démodulation du signal, cette qualité théorique étant directement liée à la bande de fréquence allouée et au schéma de modulation et de codage utilisé. Cette étape peut être réalisée une unique fois, ou réalisée périodiquement de manière à prendre en compte des variations des conditions de propagation.

Le procédé selon l'invention comprend ensuite une deuxième étape 302, au cours de laquelle l'allocateur de ressources radio 202 est notifié d'un besoin de transmission d'un signal discret. Cette notification peut être réalisée de différentes manières. Elle peut par exemple être envoyée par le contrôleur de transmission 221 dédié à la transmission discrète, transmise par le contrôleur de transmission 211, envoyée par l'un des terminaux 212, 213 ou 223, envoyée par un gestionnaire de bordure lors de l'entrée du porteur dans la zone de couverture du satellite 201, envoyée par le porteur 222 lors de son entrée dans le réseau, envoyée par un porteur souhaitant passer d'un mode de transmission « conventionnel » à un mode de transmission discret, planifiée dans l'allocateur de ressources radio 202, transmise par un réseau tiers auquel l'allocateur de ressources radio 202 est connecté, ou de n'importe quelle autre manière adaptée.

Cette notification a pour effet d'informer l'allocateur de ressources radio 202 qu'un besoin de transmission discrète existe, et que la troisième étape du procédé doit être engagée. La notification peut être accompagnée d'une information concernant la largeur de bande souhaitée pour la transmission des signaux du porteur 222, et de toute autre information pertinente, comme par exemple un débit souhaité ou un identifiant du destinataire du signal discret, lorsque ces informations ne sont pas des données de configuration fixes connues au préalable de l'allocateur de ressources radio 202.

La première étape 301 du procédé peut être réalisée après la notification du besoin de transmission discrète de l'étape 302. Dans ce cas, le temps nécessaire pour mettre en œuvre le procédé selon l'invention, et donc le temps d'accès aux ressources radio pour le porteur 222, augmente.

Suite à la notification du besoin de transmission d'un signal discret faite à l'étape 302, l'allocateur de ressource radio 202 réalise une troisième étape 303 d'identification de bandes de fréquences adaptées pour la transmission du signal discret par multiplexage en puissance avec les transmissions conventionnelles. Cette identification se fait en plusieurs temps. Dans un premier temps, l'allocateur de ressources radio identifie dans un les bandes de fréquences continues utilisées par un ou plusieurs équipements conventionnels dont la largeur est supérieure ou égale à la largeur de bande du signal discrets émis par le porteur 222.

Dans un deuxième temps, pour chacune de ces bandes de fréquence, la densité de puissance du signal discret émis par le porteur 222, c'est-à-dire le rapport entre la puissance du signal et la bande utilisée, est comparée à celle des équipements conventionnels émettant dans cette bande. La densité de puissance du signal discret doit :
- être inférieure à celle de chaque signal conventionnel utilisant la même bande de fréquence, l'écart entre les deux densités de puissances étant déterminé de manière à garantir la possibilité de mettre en œuvre un algorithme de suppression d'interférences successives. Pour ceci, il convient que la réception du signal conventionnel par l'équipement destinataire du signal discret soit possible malgré le bruit supplémentaire généré par la transmission du signal du porteur 222, et
- être suffisante pour permettre la bonne réception du signal transmis par le porteur 222, indépendamment de la contribution du signal conventionnel.

En ce qui concerne le premier point, le multiplexage en puissance du signal discret avec le signal conventionnel, sans considération d'orthogonalité comme c'est le cas dans le procédé décrit, est vu par les équipements de réception comme l'ajout un bruit de transmission supplémentaire dans la bande de fréquence du signal émis par le porteur. Ce bruit supplémentaire ne doit pas empêcher la bonne réception du signal conventionnel car la démodulation de ce signal est requise pour la mise en œuvre d'un algorithme de suppression d'interférences successives. Il est donc nécessaire qu'un écart minimum sépare les densités de puissance des deux signaux. Cet écart dépend de la qualité du signal conventionnel reçu par l'équipement destinataire de la transmission discrète (213, 223) mesurée lors de la première étape du procédé, ainsi que du rapport entre la largeur de bande commune à la transmission du signal conventionnel et du signal discret sur la largeur de bande du signal conventionnel, et du schéma de modulation et de codage d'erreur considéré. Ces considérations sont connues de l'homme du métier qui est en mesure de déterminer l'écart minimum requis. Lorsque les deux signaux transmis utilisent le même standard de communication dans une même bande de fréquence avec le même schéma de modulation et de codage, un écart de densité de puissance de 6dB est une valeur approximative généralement suffisante pour permettre la bonne réception du signal discret. Cette valeur de 6dB est un ordre de grandeur devant être évalué au cas par cas.

En ce qui concerne le second point, le niveau de puissance du signal émis par le porteur 222 doit être suffisant pour que l'équipement destinataire du signal discret (213 pour la figure 2a et 223 pour la figure 2b) puisse réaliser la démodulation de ce signal seul, une fois exécuté l'algorithme de suppression d'interférences successives. Il dépend alors du bilan de liaison de la transmission discrète, que l'allocateur de ressources radio 202 peut estimer de manière théorique dans un premier temps, puis par la suite mesurer par la remontée d'informations sur la qualité de la transmission. L'utilisation d'antennes de grand diamètre par l'équipement de réception du signal discret permet au porteur 222 d'utiliser une puissance d'émission réduite, et donc d'encore améliorer la discrétion de la transmission. Les contrôleurs de transmission 211 et 221 sont généralement équipés d'antennes de grand diamètre ayant un fort gain de réception, contrairement aux porteurs, ce qui les rend particulièrement adaptés à la réception du signal discret. En pratique, un gain supplémentaire peut être provisionné dans le bilan de liaison afin d'anticiper des éventuelles imperfections dans la reconstitution du signal discret faite par l'algorithme de suppression d'interférences successives mis en œuvre par le récepteur.

Avantageusement, l'allocateur de ressources radio 202 peut également s'assurer que la transmission du signal discret ne mette pas en péril la bonne réception des signaux conventionnels par les autres équipements du réseau, à partir d'informations de qualité pouvant être recueillies au cours de la première étape auprès des autres équipements du réseau.

Lorsqu'il n'est pas possible de satisfaire à la condition sur l'écart de densité de puissance minimale entre les signaux conventionnels et le signal à émettre discrètement, à la condition sur la puissance minimum d'émission de ce signal et à la condition sur la bonne démodulation du signal conventionnel par l'équipement destinataire du signal discret, alors la bande de fréquence concernée n'est pas adaptée à la transmission du signal du porteur.

L'ensemble des données nécessaires à l'identification des bandes de fréquences et niveaux de puissance associés pour la transmission du signal discret sont connues de l'allocateur de ressources radio au moment où il est notifié du besoin de transmission discrète. Cette étape d'identification peut donc être réalisée très rapidement, offrant ainsi une disponibilité très rapide des ressources radio pour le porteur 222.

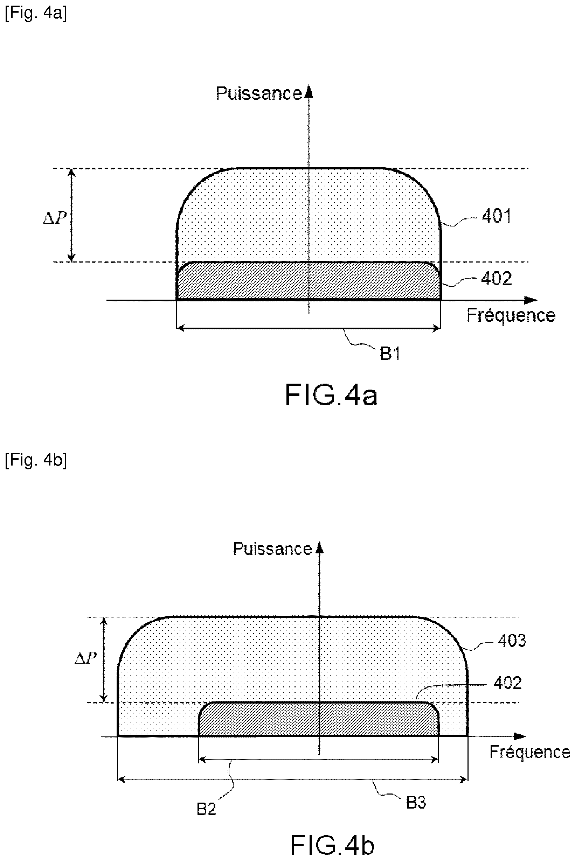

Les figures 4a à 4c représentent, à titre d'exemple, différents cas de figure dans lesquelles des bandes de fréquences sont adaptées à la transmission du signal émis par le porteur 222.

Sur la figure 4a, la largeur de bande de fréquence utilisée pour la transmission d'un signal conventionnel 401 est égale à la largeur de bande requise pour la transmission du signal du porteur 402. En outre, un écart minimum Δ*P* entre la puissance d'émission des deux signaux peut être assuré, permettant à la fois la bonne démodulation du signal conventionnel et la bonne réception du signal du porteur après suppression du signal conventionnel. La bande de fréquence B1, utilisée pour la transmission du signal conventionnel est donc bien adaptée pour la mise en œuvre du procédé.

Sur la figure 4b, la largeur de bande de fréquence utilisée pour la transmission d'un signal conventionnel 403 est supérieure à la largeur de bande requise pour la transmission du signal du porteur 402. En outre, un écart minimum Δ*P* entre la densité de puissance d'émission des deux signaux peut être assuré. On compare ici les densités de puissance d'émission dans la bande B2 et non les puissances d'émission, car les deux signaux n'ont pas la même largeur de bande de fréquence. La bande de fréquence B2, comprise dans la bande de fréquence utilisée par le signal conventionnel, est donc adaptée pour la mise en œuvre du procédé, de même que la bande de fréquence B3 correspondant à l'ensemble de la bande de fréquence utilisé pour la transmission du signal conventionnel.

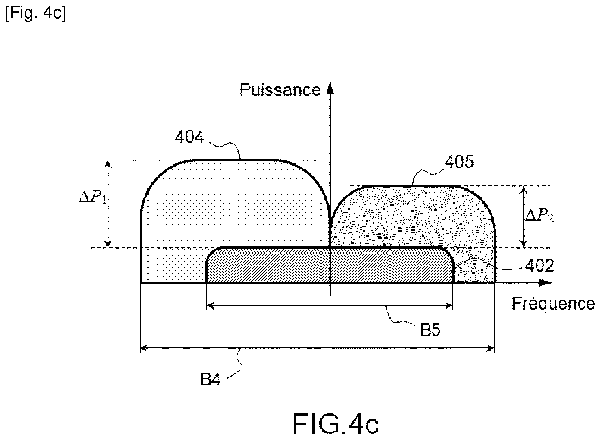

Sur la figure 4c, la largeur de bande de fréquence 402 requise pour la transmission du signal du porteur est supérieure à celles des bandes de fréquences utilisées par deux équipements conventionnels 404 et 405. Ces bandes ne sont donc pas adaptées pour un multiplexage en puissance avec le signal du porteur. Cependant, prises conjointement, ces deux bandes de fréquences forment une bande de fréquence B4 dont la largeur est supérieure à celle du signal du porteur. Au sein de cette bande de fréquence, un écart minimum Δ*P*₁ entre la densité de puissance d'émission du signal 404 et celle du signal du porteur, ainsi qu'un écart minimum Δ*P*₂ entre la densité de puissance d'émission du signal 405 et celle du signal du porteur, peuvent être assurés. La bande de fréquence B4, plus large que celle requise pour la transmission discrète du signal du porteur, est donc adaptée pour la mise en œuvre du procédé, de même que la bande B5 dont la largeur est égale à celle du signal discret.

Enfin, le procédé comprend une quatrième étape 304 de transmission de la ou des bandes de fréquences identifiées lors de la deuxième étape au porteur 222 et à l'équipement destinataire de la transmission discrète (213 pour la figure 2a et 223 pour la figure 2b), ainsi que des niveaux de puissance associés à chaque bande, ou d'un niveau de puissance unique si celui-ci est compatible de chaque bande de fréquence identifiée.

Cette transmission est faite par l'allocateur de ressources radio 202 à travers le contrôleur de gestion impliqué (211 pour la figure 2a et 221 pour la figure 2b). Elle ne doit pas nécessairement être transmise de manière discrète puisque l'invention vise uniquement à rendre discrètes les émissions réalisées par le porteur 222. Elle peut être cependant être chiffrée de manière à ne pas être interceptée.

A l'issue des étapes 301 à 304 du procédé selon l'invention, les conditions nécessaires à la mise en œuvre d'une transmission discrète par le porteur 222 via le satellite 201 sont réunies. Un porteur souhaitant transmettre des données dispose ainsi presque immédiatement des ressources radio, puisque ses émissions étant faites de manière non orthogonales avec celles des autres équipements, son unique contrainte est de recevoir les informations envoyées par l'allocateur de ressources radio 202 concernant la ou les bandes de fréquences à utiliser, et les niveaux de puissance radio associés.

Dans un mode de réalisation, le procédé comprend également une cinquième étape 305, mise en œuvre par le porteur 222 lorsqu'il souhaite transmettre le signal discret. Cette étape ne requiert pas de synchronisation entre le porteur et les différents équipements du réseau puisque les émissions sont faites sans considération d'orthogonalité avec les autres équipements, que ce soit en temps, en fréquence ou en code. Cette étape est optionnelle car, en l'absence d'informations à transmettre, le porteur peut se contenter de recevoir les informations de configuration transmises par l'allocateur de ressources radio, sans émettre de signaux.

Enfin, le cas échéant, le procédé comprend une sixième étape 306 de réception, par l'équipement destiné à la réception du signal discret (213 pour la figure 2a, 223 pour la figure 2b), du signal envoyé par le porteur. Pour ceci, le signal radio est acquis dans une bande de fréquence comprenant la bande de fréquence attribuée par l'allocateur de fréquence pour la transmission discrète, puis un algorithme de suppression d'interférences successives est mis en œuvre pour supprimer la contribution du signal conventionnel et reconstituer le signal transmis par le porteur 222.

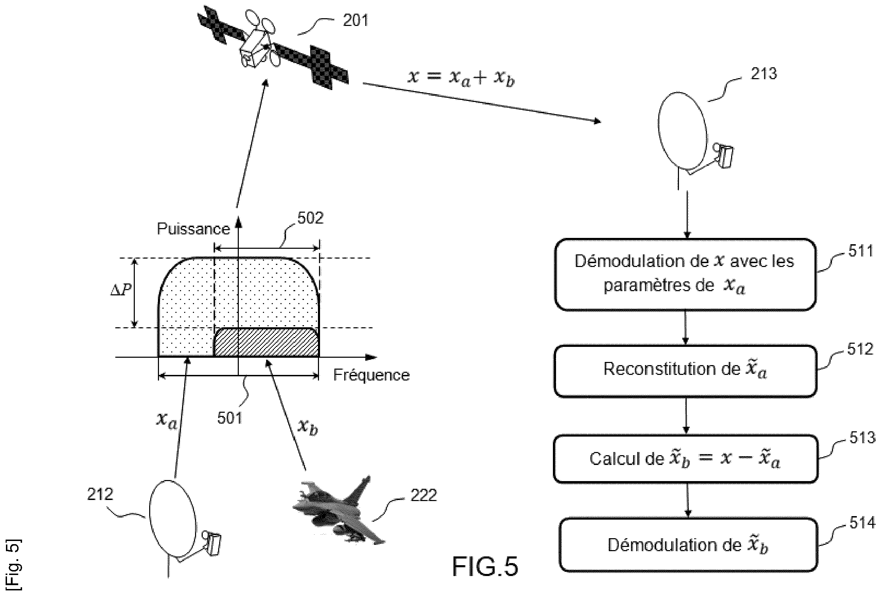

La figure 5 illustre plus en détails la mise en œuvre d'un algorithme de suppression d'interférences successives permettant de reconstituer le signal transmis par le porteur 222, dans un contexte opérationnel semblable à celui décrit à la figure 2a.

La bande de fréquence 502, incluse dans la bande de fréquence 501 utilisée par le terminal 212 pour émettre le signal *xₐ*, est identifiée par l'allocateur de ressources radio comme étant adaptée pour la transmission du signal *x_{b}* émis par le porteur 222 avec une densité de puissance inférieure d'un niveau Δ*P* à la densité de puissance du signal *xₐ.* Les émissions des deux signaux *xₐ* et *x_{b}* sont réalisés par chacun des équipements, ce qui résulte en un multiplexage en puissance des deux signaux, sans considération d'orthogonalité. Le signal résultant *x = xₐ* + *x_{b},* est relayé par le satellite 201 jusqu'au terminal 213.

Dans un premier temps 511, la station sol 213 démodule le signal *x* acquis dans la bande 501 comme s'il s'agissait du signal *xₐ*, c'est-à-dire en considérant les paramètres de démodulation associés aux transmissions du terminal 102. L'algorithme de suppression d'interférences successives peut être mis en œuvre à partir du signal *xₐ* démodulé. Cependant, réaliser également le décodage du signal démodulé permet d'améliorer les performances de l'algorithme en corrigeant des erreurs liées au canal de propagation. En outre, le terminal 213 réalise l'estimation du canal de propagation *hₐ* associé au signal *xₐ.*

Dans un deuxième temps 512, le signal *xₐ* démodulé, et éventuellement décodé, est encodé si nécessaire, et modulé en utilisant les paramètres de configuration des transmissions du terminal 212, puis convolué avec le canal de propagation estimé, afin d'obtenir un signal *x̃ₐ,* estimée du signal *hₐxₐ* transmis par le terminal.

Dans un troisième temps 513, le signal *xₐ* reconstitué est soustrait du signal x reçu dans la bande 501. On limitant la bande de fréquence observée à la bande 502, le terminal 213 a alors reconstitué le signal *x̃_{b} = h_{b}x_{b}.*

Enfin, dans un quatrième temps 514, le signal *x̃_{b}* est démodulé et décodé en utilisant les paramètres de la transmission du signal discret.

Ce procédé est particulièrement adapté aux transmissions satellitaires. En effet, la directivité des antennes fait que les canaux de propagation *hₐ* et *h_{b}* ne devraient pas comprendre de trajets multiples. Ils sont donc simples à estimer puisqu'ils se limitent mesurer une atténuation du trajet direct. Contrairement aux réseaux terrestres dans lesquels de nombreux multitrajets peuvent venir complexifier la reconstitution du signal *x̃_{b}* et introduire des erreurs, la mise en œuvre d'un algorithme de suppression d'interférences successives dans un réseau satellitaire permet de reconstituer un signal *x̃_{b}* très proche du signal *x_{b}.*

Dans un mode de réalisation, le procédé selon l'invention comprend une septième étape 307, pouvant être réalisée périodiquement pendant l'exécution du procédé. Cette étape est réalisée par l'allocateur de ressources radio 202, qui est configuré pour collecter des informations relatives à la qualité de réception des signaux conventionnels et du signal discret auprès de l'équipement destinataire du signal discret (le terminal 213 pour la figure 2a, et le terminal 223 pour la figure 2b). A partir de ces informations, l'allocateur de ressources radio 202 peut remettre à jour les bandes de fréquences et niveaux de puissance utilisés pour la transmission du signal discret et/ou les paramètres de transmission du ou des signaux conventionnels transmis dans la ou les mêmes bandes de fréquence, afin d'améliorer la mise en œuvre de l'algorithme de suppression d'interférences successives et la récupération du signal discret. Avantageusement, l'allocateur de ressources radio peut collecter des informations sur la qualité des signaux conventionnels reçus par les équipements du réseau conventionnel 211, 212, 213, et ajuster les paramètres de transmission des signaux conventionnels afin d'améliorer leurs conditions de réception.

Pour ceci, l'allocateur de fréquence reprend le procédé de transmission d'un signal discret au niveau de la troisième étape 303, et le complète en considérant en outre la qualité de réception du signal discret pour ajuster les autres paramètres lorsque cela est nécessaire. Cette étape rend le procédé dynamique et réactif face aux changements de conditions de propagation et face à la présence d'interférences intentionnelles ou non au sein du réseau.

Le procédé de synchronisation selon l'invention présente de nombreux avantages :
- il permet de masquer le signal discret transmis par le porteur 222 sous les transmissions réalisées par un ou plusieurs équipements conventionnels 211, 212, 213,
- s'affranchissant de conditions d'orthogonalité avec les autres équipements du réseau, le porteur 222 peut transmettre dès qu'il est en possession des paramètres de transmission qui lui sont attribués par l'allocateur de ressources radio, sans avoir à déclarer son entrée, se synchroniser avec les autres équipements, requérir des ressources et attendre la disponibilité de ces ressources. Le temps d'accès aux ressources radio est donc minimal,
- la largeur de bande attribuée au signal du porteur est indépendante de celle des autres équipements, la seule condition à respecter étant qu'une bande de fréquence continue d'une largeur supérieure ou égale à celle du porteur soit attribuée aux émissions réalisées par un ou plusieurs équipements du réseau,
- la complexité d'implémentation du procédé au niveau du porteur est nulle. Elle est faible au niveau de l'allocateur de ressources radio, qui se contente de réaliser des bilans de liaison et d'analyser des conditions de propagation afin d'identifier des bandes de fréquences adaptées et les niveaux de puissance associés. La complexité du procédé repose donc principalement sur le terminal destinataire du signal discret (213 dans la figure 2a, 223 dans la figure 2b), mais cette complexité reste raisonnable puisque la réception consiste seulement à réaliser démoduler (et le cas échéant décoder) deux signaux au lieu d'un, et à re-moduler (et le cas échéant re-coder) un signal,
- il est adapté aux porteurs ayant des antennes de petite taille puisque les émissions du porteur sont de puissance réduite par rapport à celles des équipements conventionnels, ce qui contribue en outre à la discrétion des transmissions,
- il est adapté aux porteurs ayant une forte mobilité puisque les transmissions du porteur n'ont pas à respecter de contraintes d'orthogonalités avec les autres transmissions relayées par le satellite,
- il est applicable en connectivité directe comme en connectivité croisée,
- il est compatible avec l'utilisation de techniques d'étalement de spectre permettant de diminuer encore le niveau de puissance requise à l'émission, et donc d'améliorer la discrétion de la transmission,
- par rapport à un procédé dans lequel la discrétion serait uniquement obtenue par l'utilisation d'une technique d'étalement de spectre, le procédé selon l'invention permet de bénéficier d'un meilleur rapport signal à bruit et donc d'offrir des débits supérieurs,
- il est compatible avec les nouveaux satellites dits satellites HTS (sigle anglais pour *High Throughput Satellite* ou satellite haut débit) munis de multi-faisceaux d'émission et de réception.

Le procédé selon l'invention présente en outre l'avantage d'être compatible avec un mécanisme de saut de fréquence. En effet, lorsque plusieurs bandes de fréquences sont attribuées aux transmissions du porteur, ce dernier peut utiliser plusieurs des bandes de fréquences identifiées pour mettre en œuvre un tel mécanisme. C'est également le cas lorsque la bande de fréquence identifiée par l'allocateur de ressources fréquentielles est plus large que la bande de fréquence nécessaire pour la transmission du signal du porteur, comme c'est le cas sur la figure 4b, le porteur pouvant alors réaliser du saut de fréquence à l'intérieur de cette bande de fréquence. L'absence de contraintes liées à l'orthogonalité des transmissions avec les autres équipements utilisant le satellite rend le mécanisme de saut de fréquence très simple à mettre en œuvre, sans considération des autres systèmes de communication.

Le procédé selon l'invention présente comme autre avantage qu'il peut être mis en œuvre sur l'ensemble des transmissions réalisées par un satellite, même lorsque ces transmissions proviennent d'équipements appartenant à des systèmes satellitaires hétérogènes et non synchronisés. Il suffit en effet que les allocations des ressources satellitaires des équipements de ces différents systèmes soient pilotées par un allocateur de ressources radio commun, ou par plusieurs allocateurs de ressources radio collaborant entre eux.

C'est le cas pour les architecture OSIMM, exemple type de structuration et de principe de coordination d'une architecture à Orchestration de services IP Multi-domaine et Multi-Allocateur de ressources Radio, telle que décrite dans la demande PCT WO/2018114788 A1.

Une telle architecture revisite le modèle OSI (acronyme anglais pour *Open System Interconnection,* ou interconnexion de systèmes ouverts) tout en lui apportant souplesse et virtualisation. L'architecture OSIMM présente :
- un réseau IP mutualisé entre tous les gestionnaires de ressources,
- une structuration du réseau en strates/étages conduite par le type de ressources impactées, et
- des groupements de gestionnaires ad-hoc par domaine, par inter-domaine, par inter-étage.

OSIMM se décompose en différentes étapes dans un réseau structuré en plusieurs strates.

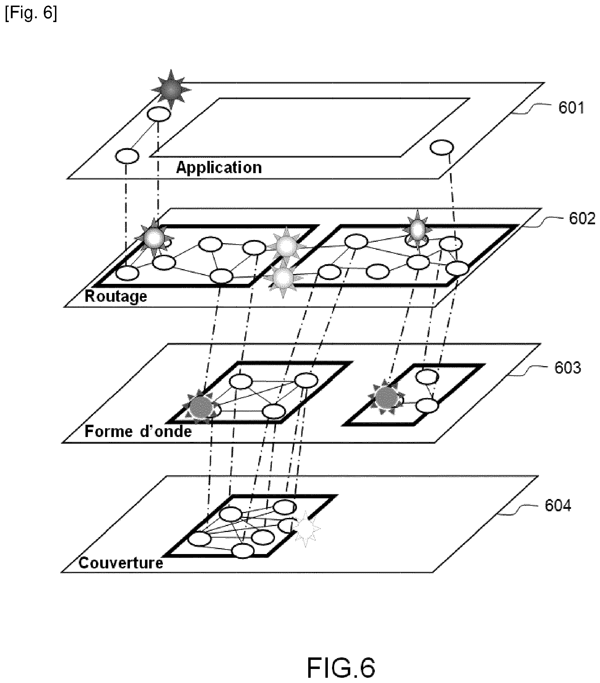

La figure 6 représente les différentes strates d'une architecture OSIMM. Celle-ci comprend :
- une strate application 601, prenant en entrée des flux d'information applicatifs,
- une strate routage 602, qui dans l'exemple de la figure 6 comprend deux réseaux IP différents regroupés sous la même strate applicative,
- une strate forme d'onde 603, qui dans l'exemple de la figure 6 comprend deux formes d'ondes différentes, et
- une strate couverture 604.

L'architecture OSIMM est une architecture multi réseaux. Le procédé selon l'invention se situe au niveau de la strate forme d'onde 603, où la fonctionnalité de gestion des transmissions discrètes est implémentée et mise en œuvre par une coordination des allocateurs de ressources radio pour servir de bout-en-bout un besoin applicatif. Le procédé selon l'invention se prête particulièrement bien à une implémentation dans une telle architecture car la demande d'échange d'informations en mode discret d'un porteur peut être traitée à la demande et impacter un ensemble d'allocateurs de ressources de réseaux hétérogènes correspondant à la couverture radio nécessaire au porteur. Ces allocateurs sont alors en mesure de sélectionner les bandes de fréquence occupées par des terminaux dont la puissance d'émission peut être maintenue à un niveau largement supérieur à celui du porteur en mode discret.

Dans un mode de réalisation du procédé de transmission discrète d'un signal selon l'invention, l'allocateur de ressources radio est configuré pour réajuster les paramètres de transmission des terminaux conventionnels 212, 213 lors de la troisième étape 303 du procédé selon l'invention, afin d'améliorer la disponibilité de bandes de fréquences adaptés pour accueillir les transmissions du porteur 132. A cet effet, l'allocateur de ressources radio peut modifier la position ou la largeur des bandes de fréquences attribuées aux équipements conventionnels afin de créer des bandes de fréquences dont la largeur est supérieure ou égale celle du signal discret. Cette caractéristique est particulièrement intéressante lorsque le signal transmis par le porteur a une large bande, de par l'utilisation d'une antenne de petit diamètre et/ou de techniques d'étalement de spectre.

L'allocateur de ressources radio peut également être configuré pour modifier la puissance d'émission et/ou les paramètres de transmission (schéma de modulation et de codage) des signaux conventionnels, afin que l'écart minimum Δ*P* nécessaire à la démodulation des signaux conventionnels lorsque le signal du porteur est émis soit atteint, ou pour permettre la bonne réception par les autres équipements du réseau du signal conventionnel en présence du signal discret. La modification de la puissance d'émission des signaux conventionnels peut également avoir pour but de conformer les émissions aux recommandations en vigueur pour les transmissions satellites. En effet, ces recommandations ne considèrent qu'un unique émetteur dans une bande donnée. Le surcroit de puissance apportée par le signal du porteur 222 peut avoir pour conséquence que le signal parvenant au satellite 201 ne respecte plus ces recommandations. L'allocateur de ressources radio peut alors réduire la puissance du signal conventionnel de manière à ce que le signal parvenant au satellite 201 respecte les recommandations, dès lors que l'écart entre les densités de puissance des deux signaux permette toujours la mise en œuvre d'un algorithme de suppression d'interférences successives à la réception.

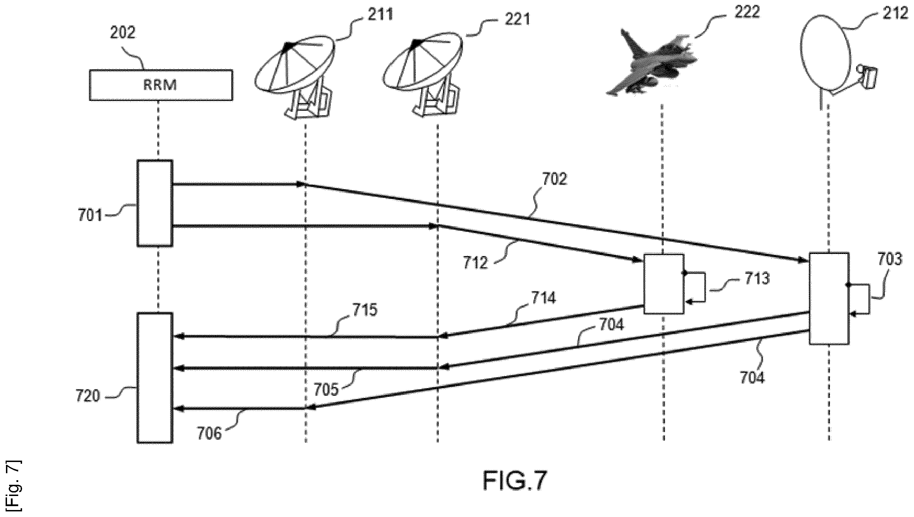

La figure 7 est un diagramme des échanges réalisés dans le plan de contrôle entre les différents acteurs permettant la mise à jour des paramètres de transmission des différents équipements. L'environnement opérationnel de la figure 7 est proche de celui représenté en figure 2b, dans lequel le porteur 222 est géré par un contrôleur de transmission 221 ne faisant pas partie du système de transmission conventionnel. Le système de transmission conventionnel comprend un contrôleur de transmission 211 et un terminal 212. Le signal discret est transmis à destination du contrôleur de transmission 221.

En 701, l'allocateur de ressources radio 202 attribue à chaque équipement conventionnel utilisant les ressources du satellite 201 des paramètres de transmission, comprenant une bande de fréquence, une puissance d'émission et lorsque c'est prévu, un schéma de modulation et de codage. Ces données sont transmises sous la forme de données de signalisation 702 au terminal 212 par l'intermédiaire du contrôleur de transmission 211. Les terminaux conventionnels 212 adaptent en 703 leur forme d'onde aux données de signalisation reçues.

Lorsque le terminal 212 envoie des données, des mesures de la qualité du signal reçu sont réalisées par les équipements recevant ces données. En particulier, l'équipement 221 destinataire du signal discret réalise une mesure 705 de la qualité du signal qu'il reçoit, comme par exemple une mesure de rapport porteuse sur bruit (en anglais *Carrier to Noise ratio,* ou C/N), et la transmet à l'allocateur de ressources radio 202. Les équipements conventionnels, tel que le contrôleur de transmission 211 ou les autres terminaux du réseau, peuvent également faire une mesure de la qualité du signal 706 qu'ils reçoivent depuis l'équipement 212, et transmettre cette mesure à l'allocateur de ressources radio 202.

Connaissant les ressources fréquentielles attribuées aux équipements conventionnels 212 et la qualité des signaux conventionnels 705 reçus par le destinataire de la transmission 221, l'allocateur de ressources radio 202 identifie en 701 des bandes de fréquence et puissances d'émission associées pour la transmission du signal discret depuis le porteur 222 par multiplexage en puissance avec les transmissions conventionnelles. Dans l'illustration de la figure 7, les signaux conventionnels utilisés pour dissimuler les transmissions du porteur 222 sont celles du terminal 212. La ou les bandes de fréquences et niveau de puissance d'émission identifiées sont transmises sous la forme de données de signalisation 712 au porteur 222 par le contrôleur de transmission 221, ainsi qu'à l'équipement destinataire du signal discret, qui dans l'exemple est le même équipement. En 713, le porteur adapte la forme d'onde utilisée pour la transmission du signal discret en fonction des données de configuration reçues. Lorsqu'il envoie, en 714, le signal utile à la station 221, une mesure 715 de la qualité du signal reçu par le destinataire est réalisée.

Si la qualité du signal 704 reçu par le contrôleur 221 est insuffisante pour mettre en œuvre un algorithme de suppression d'interférences successives, ou si la qualité 715 du signal discret reçu par le contrôleur 221 est insuffisante pour permettre une démodulation et un décodage corrects du signal, l'allocateur de ressources radio ajuste les paramètres 712 de transmission du signal discret (bande de fréquence allouée, niveau de puissance d'émission et/ou schéma de modulation et de codage). Il peut également être configuré pour réajuster les paramètres 702 de transmission des signaux conventionnels (largeur de bande de fréquence allouée, niveau de puissance d'émission et/ou schéma de modulation et de codage). Dans un mode de réalisation particulier, l'allocateur de ressources fréquentielles est également configuré pour réajuster les paramètres de transmission 702 et/ou 712 lorsque la transmission du signal discret a pour effet que la qualité 706 de réception des signaux conventionnels auprès des autres équipements du réseau font que la correcte démodulation et décodage de ces signaux n'est plus possible.

Dans le mode de fonctionnement décrit à la figure 7, l'allocateur de ressources radio 202 réalise une constante supervision des conditions de réception des signaux auprès des divers équipements du réseau, et réajuste les paramètres de transmission du signal discret et des signaux conventionnels de manière à ce que la transmission discrète soit rendue possible sans empêcher la bonne réception des autres signaux.

## Revendications

1. Procédé de transmission d'un signal discret dans un système de communications comprenant un satellite (201), au moins un premier équipement de transmission (212), un contrôleur de transmission (211) configuré pour échanger des données de signalisation avec le au moins un premier équipement de transmission à travers un lien de communication impliquant le satellite, un deuxième équipement de transmission (222) configuré pour émettre ledit signal discret à destination d'un troisième équipement de transmission (213, 223) à travers un lien de communication impliquant le satellite, et un allocateur de ressources radio (202) configuré pour allouer des ressources radio comprenant une bande de fréquence et d'un niveau de puissance d'émission aux premiers équipements de transmission (212) par l'intermédiaire du contrôleur de transmission (211), le procédé étant **caractérisé en ce qu'**il comprend :
- une première étape (301) de collecte, par l'allocateur de ressources radio (202), d'informations relatives à une qualité des signaux reçus par le troisième équipement de transmission (213, 223) sur un ou plusieurs liens de communication impliquant le satellite,
- une deuxième étape (302) de notification d'un besoin de transmission du signal discret à l'allocateur de ressources radio (202),
- une troisième étape (303) d'identification, par l'allocateur de ressources radio (120), d'au moins une première bande de fréquence (B1, B5) adaptée pour la transmission du signal discret par multiplexage en puissance avec au moins un signal transmis par un premier équipement de transmission (212) dans la première bande de fréquence, et de calcul d'un niveau de puissance d'émission associé, l'identification étant faite à partir des bandes de fréquences allouées aux premiers équipements de transmission et des informations collectées durant la première étape du procédé (301), et
- une quatrième étape (304) de transmission, par l'allocateur de ressources radio à travers un ou plusieurs liens de communication impliquant le satellite, de chaque première bande de fréquence et niveau de puissance associé identifiés lors de la troisième étape (303) du procédé au deuxième équipement de transmission (222) et au troisième équipement de transmission (213, 223).

2. Procédé de transmission d'un signal discret selon la revendication 1, dans lequel le contrôleur de transmission (211) et ledit au moins un premier équipement (212) appartiennent à un premier réseau satellitaire, et dans lequel le deuxième équipement de transmission (222) et le troisième équipement de transmission (223) appartiennent à un deuxième réseau satellitaire comprenant en outre un contrôleur de transmission (221) configuré pour échanger des données de signalisation avec le deuxième équipement de transmission (222) et le troisième équipement de transmission (223) et pour communiquer avec l'allocateur de ressources radio (202).

3. Procédé de transmission d'un signal discret selon l'une des revendications précédentes, comprenant en outre une cinquième étape (305) d'émission du signal discret, par le deuxième équipement de transmission à travers un lien de communication impliquant le satellite, en utilisant une première bande de fréquence et un niveau de puissance d'émission transmis lors de la quatrième étape (304).

4. Procédé de transmission d'un signal discret selon la revendication 3 comprenant en outre une sixième étape (306) de réception du signal discret par le troisième équipement dans une bande de fréquence comprenant la bande de fréquence utilisée lors de la cinquième étape (305), et de récupération du signal discret par la mise en œuvre d'un algorithme de suppression d'interférences successives.

5. Procédé de transmission d'un signal discret selon la revendication 4, dans lequel le niveau de puissance d'émission du signal discret dans une première bande de fréquence donnée est calculé de manière à ce qu'un écart entre la densité de puissance d'un signal transmis par chaque premier équipement utilisant la première bande de fréquence et la densité de puissance du signal discret permette au troisième équipement de transmission (213, 223) de mettre en œuvre d'un algorithme de suppression d'interférences successives lors de la sixième étape (306) du procédé.

6. Procédé de transmission d'un signal discret selon l'une des revendications 4 et 5, comprenant en outre une septième étape (307) de :
- collecte, par l'allocateur de ressources radio (202), d'informations relatives à une qualité du signal discret reçu par le troisième équipement de transmission (213, 223), et
- réitération du procédé de transmission à partir de la troisième étape (303) en prenant en compte lesdites informations relatives à une qualité du signal discret reçu.

7. Procédé de transmission d'un signal discret selon l'une des revendications précédentes, dans lequel la troisième étape (303) comprend l'ajustement de la bande de fréquence attribuée à au moins un premier équipement en fonction de la largeur de la première bande de fréquence.

8. Procédé de transmission d'un signal discret selon l'une des revendications précédentes, dans lequel la troisième étape (303) comprend l'ajustement du niveau de puissance d'émission attribuée à au moins un premier équipement pour émettre dans une première bande de fréquence.

9. Procédé de transmission d'un signal discret selon l'une des revendications précédentes, dans lequel le deuxième équipement de transmission est configuré pour mettre en œuvre un mécanisme de saut de fréquence parmi une ou plusieurs des premières bandes de fréquences.

10. Procédé de transmission d'un signal discret selon l'une des revendications précédentes, dans lequel le deuxième équipement de transmission (222) et l'allocateur de ressources radio (202) font partie d'un réseau multicouches suivant une architecture à Orchestration de services IP Multi-domaine et Multi-Allocateur de ressources Radio par lequel le deuxième équipement de transmission notifie l'allocateur de ressources de son besoin de transmission du signal discret lors de la deuxième étape (302) du procédé.

11. Allocateur de ressources radio (120) configuré pour mettre en œuvre les quatre premières étapes (301, 302, 303, 304) d'un procédé de transmission d'un signal discret selon l'une des revendications précédentes.

12. Dispositif de réception d'un signal discret dans un système de communications, ledit dispositif étant configuré pour :
- transmettre, à un allocateur de ressources radio (120) selon la revendication 11, des informations relatives à une qualité des signaux reçus sur au moins un lien de communication impliquant le satellite,
- recevoir, depuis l'allocateur de ressources radio, au moins une première bande de fréquence et un niveau de puissance associé relatif à la transmission dudit signal discret,
- acquérir un signal radio dans une bande de fréquence comprenant ladite première bande de fréquence, et
- mettre en œuvre un algorithme de suppression d'interférences successives sur le signal radio afin de récupérer ledit signal discret.

## Patentansprüche

1. Verfahren zum Übertragen eines diskreten Signals in einem Kommunikationssystem, umfassend einen Satelliten (201), mindestens eine erste Übertragungsausrüstung (212), eine Übertragungssteuerung (211), die dafür konfiguriert ist, mit der mindestens einen ersten Übertragungsausrüstung über eine Kommunikationsleitung, die den Satelliten einbezieht, Signalisierungsdaten auszutauschen, eine zweite Übertragungsausrüstung (222), die dafür konfiguriert ist, das diskrete Signal über eine Kommunikationsleitung, die den Satelliten einbezieht, zu einer dritten Übertragungsausrüstung (213, 223) auszusenden, und einen Funkressourcenzuordner (202), der dafür konfiguriert ist, Funkressourcen, die ein Frequenzband und einen Aussendeleistungspegel umfassen, mittels der Übertragungssteuerung (211) den ersten Übertragungsausrüstungen (212) zuzuordnen, wobei das Verfahren **dadurch gekennzeichnet ist, dass** es Folgendes umfasst:
- einen ersten Schritt (301) zum Erfassen, durch den Funkressourcenzuordner (202), von Informationen betreffend eine Qualität der von der dritten Übertragungsausrüstung (213, 223) auf einer oder mehreren Kommunikationsleitungen, die den Satelliten einbeziehen, empfangenen Signale,
- einen zweiten Schritt (302) zum Benachrichtigen des Funkressourcenzuordners (202) über den Bedarf der Übertragung des diskreten Signals,
- einen dritten Schritt (303) zum Identifizieren, durch den Funkressourcenzuordner (120), mindestens eines ersten Frequenzbandes (B1, B5), das für die Übertragung des diskreten Signals durch Leistungsmultiplexen mit mindestens einem von einer ersten Übertragungsausrüstung (212) in dem ersten Frequenzband übertragenen Signal geeignet ist, und zum Berechnen eines zugewiesenen Aussendeleistungspegels, wobei die Identifizierung anhand von den ersten Übertragungsausrüstungen zugeordneten Frequenzbändern und während des ersten Schritts des Verfahrens (301) erfassten Informationen erfolgt, und
- einen vierten Schritt (304) zum Übertragen, durch den Funkressourcenzuordner über eine oder mehrere Kommunikationsleitungen, die den Satellit einbeziehen, jedes ersten Frequenzbandes und des zugeordneten Leistungspegels, die während des dritten Schrittes (303) des Verfahrens identifiziert wurden, an die zweite Übertragungsausrüstung (222) und die dritte Übertragungsausrüstung (213, 223).

2. Verfahren zum Übertragen eines diskreten Signals nach Anspruch 1, wobei die Übertragungssteuerung (211) und die mindestens eine erste Ausrüstung (212) zu einem ersten Satellitennetz gehören und wobei die zweite Übertragungsausrüstung (222) und die dritte Übertragungsausrüstung (223) zu einem zweiten Satellitennetz gehören, die ferner eine Übertragungssteuerung (221) umfassen, die dafür konfiguriert ist, mit der zweiten Übertragungsausrüstung (222) und der dritten Übertragungsausrüstung (223) Signalisierungsdaten auszutauschen und mit dem Funkressourcenzuordner (202) zu kommunizieren.

3. Verfahren zum Übertragen eines diskreten Signals nach einem der vorhergehenden Ansprüche, ferner umfassend einen fünften Schritt (305) zum Aussenden des diskreten Signals durch die zweite Übertragungsausrüstung über eine Kommunikationsleitung, die den Satelliten einbezieht, unter Verwendung eines ersten Frequenzbandes und eines Aussendeleistungpegels, der während des vierten Schrittes (304) übertragen wird.

4. Verfahren zum Übertragen eines diskreten Signals nach Anspruch 3, ferner umfassend einen sechsten Schritt (306) zum Empfangen des diskreten Signals durch die dritte Ausrüstung in einem Frequenzband, das das Frequenzband umfasst, das während des fünften Schrittes (305) verwendet wurde, und zum Wiederherstellen des diskreten Signals durch Implementieren eines Algorithmus zum Unterdrücken von aufeinanderfolgenden Interferenzen.

5. Verfahren zum Übertragen eines diskreten Signals nach Anspruch 4, wobei der Aussendeleistungspegel des diskreten Signals in einem ersten gegebenen Frequenzband derart berechnet wird, dass ein Unterschied zwischen der Leistungsdichte eines von jeder ersten Ausrüstung unter Verwendung des ersten Frequenzbandes übertragenen Signals und der Leistungsdichte des diskreten Signals es der dritten Übertragungsausrüstung (213, 223) erlaubt, während des sechsten Schrittes (306) des Verfahrens einen Algorithmus zum Unterdrücken von aufeinanderfolgenden Interferenzen zu implementieren.

6. Verfahren zum Übertragen eines diskreten Signals nach einem der Ansprüche 4 und 5, ferner umfassend einen siebten Schritt (307) zum:
- Erfassen, durch den Funkressourcenzuordner (202), von Informationen betreffend eine Qualität des diskreten Signals, das von der dritten Übertragungsausrüstung (213, 223) empfangen wurde, und
- Wiederholen des Übertragungsverfahrens ab dem dritten Schritt (303) unter Berücksichtigung der Informationen betreffend eine Qualität des empfangenen diskreten Signals.

7. Verfahren zum Übertragen eines diskreten Signals nach einem der vorhergehenden Ansprüche, wobei der dritte Schritt (303) das Einstellen des Frequenzbandes umfasst, das mindestens einer ersten Ausrüstung in Abhängigkeit von der Breite des ersten Frequenzbandes zugewiesen ist.

8. Verfahren zum Übertragen eines diskreten Signals nach einem der vorhergehenden Ansprüche, wobei der dritte Schritt (303) das Einstellen des Aussendeleistungspegels umfasst, das mindestens einer ersten Ausrüstung zugewiesen ist, um in einem ersten Frequenzband auszusenden.

9. Verfahren zum Übertragen eines diskreten Signals nach einem der vorhergehenden Ansprüche, wobei die zweite Übertragungsausrüstung dafür konfiguriert ist, einen Mechanismus zum Frequenzsprung unter einem oder mehreren der ersten Frequenzbänder umzusetzen.

10. Verfahren zum Übertragen eines diskreten Signals nach einem der vorhergehenden Ansprüche, wobei die zweite Übertragungsausrüstung (222) und der Funkressourcenzuordner (202) Teil eines mehrschichtigen Netzes gemäß einer Architektur mit Mehrdomänen- und Mehrfach-Funkressourcenzuordner-IP-Dienstorchestrierung ist, durch das die zweite Übertragungsausrüstung den Ressourcenzuordner über ihren Bedarf an einer Übertragung des diskreten Signals während des zweiten Schrittes (302) des Verfahrens benachrichtigt.

11. Funkressourcenzuordner (120), der dafür konfiguriert ist, die vier ersten Schritte (301, 302, 303, 304) eines Verfahrens zur Übertragung eines diskreten Signals nach einem der vorhergehenden Ansprüche umzusetzen.

12. Vorrichtung zum Empfangen eines diskreten Signals in einem Kommunikationssystem, wobei die Vorrichtung dafür konfiguriert ist,
- an einen Funkressourcenzuordner (120) nach Anspruch 11 Informationen zu übertragen, die eine Qualität der auf mindestens einer Kommunikationsleitung, die den Satelliten einbezieht, empfangenen Signale betreffen,
- von dem Funkressourcenzuordner mindestens ein erstes Frequenzband und einen zugewiesenen Leistungspegel betreffend die Übertragung des diskreten Signals zu empfangen,
- ein Funksignal in einem Frequenzband zu erfassen, das das erste Frequenzband umfasst, und
- einen Algorithmus zum Unterdrücken von aufeinanderfolgenden Interferenzen auf dem Funksignal zu implementieren, um das diskrete Signal wiederherzustellen.

## Claims

1. A method for transmitting a discreet signal in a communication system comprising a satellite (201), at least one first piece of transmitting equipment (212), a transmission controller (211) configured to exchange signalling data with the at least one first piece of transmitting equipment over a communication link involving the satellite, a second piece of transmitting equipment (222) configured to emit said discreet signal to a third piece of transmitting equipment (213, 223) via a communication link involving the satellite, and a radio-resource allocator (202) configured to allocate radio resources comprising a frequency band and an emission-power level to the first pieces of transmitting equipment (212) via the transmission controller (211), the method being **characterised in that** it comprises:
- a first step (301) in which the radio-resource allocator (202) collects information on a quality of the signals received by the third piece of transmitting equipment (213, 223) over one or more communication links involving the satellite,
- a second step (302) in which the radio-resource allocator (202) is notified of a need to transmit the discreet signal,
- a third step (303) in which the radio-resource allocator (120) identifies at least one first frequency band (B1, B5) suitable for transmitting the discreet signal by power multiplexing with at least one signal transmitted by a first piece of transmitting equipment (212) in the first frequency band, and computes an associated emission-power level, the identification being carried out based on the frequency bands allocated to the first pieces of transmitting equipment and on the information collected in the first step (301) of the method, and
- a fourth step (304) in which the radio-resource allocator transmits, over one or more communication links involving the satellite, each first frequency band and associated power level identified in the third step (303) of the method to the second piece of transmitting equipment (222) and to the third piece of transmitting equipment (213, 223).

2. The method for transmitting a discreet signal according to claim 1, wherein the transmission controller (211) and said at least one first piece of equipment (212) belong to a first satellite network, and wherein the second piece of transmitting equipment (222) and the third piece of transmitting equipment (223) belong to a second satellite network further comprising a transmission controller (221) configured to exchange signalling data with the second piece of transmitting equipment (222) and the third piece of transmitting equipment (223) and to communicate with the radio-resource allocator (202).

3. The method for transmitting a discreet signal according to one of the preceding claims, further comprising a fifth step (305) in which the discreet signal is emitted by the second piece of transmitting equipment over a communication link involving the satellite, using a first frequency band and an emission-power level transmitted in the fourth step (304).

4. The method for transmitting a discreet signal according to claim 3 further comprising a sixth step (306) in which the discreet signal is received by the third piece of equipment in a frequency band comprising the frequency band used in the fifth step (305), and in which the discreet signal is recovered by implementing a successive-interference-cancellation algorithm.

5. The method for transmitting a discreet signal according to claim 4, wherein the emission-power level of the discreet signal in a given first frequency band is computed so that a difference between the power density of a signal transmitted by each first piece of equipment using the first frequency band and the power density of the discreet signal allows the third piece of transmitting equipment (213, 223) to implement a successive-interference-cancellation algorithm in the sixth step (306) of the method.

6. The method for transmitting a discreet signal according to one of claims 4 and 5, further comprising a seventh step (307) in which:
- information on a quality of the discreet signal received by the third piece of transmitting equipment (213, 223) is collected by the radio-resource allocator (202), and
- the transmitting method is reiterated from the third step (303) taking into account said information on a quality of the received discreet signal.

7. The method for transmitting a discreet signal according to one of the preceding claims, wherein the third step (303) comprises adjusting the frequency band attributed to at least one first piece of equipment as a function of the width of the first frequency band.

8. The method for transmitting a discreet signal according to one of the preceding claims, wherein the third step (303) comprises adjusting the emission-power level attributed to at least one first piece of equipment for emission in a first frequency band.

9. The method for transmitting a discreet signal according to one of the preceding claims, wherein the second piece of transmitting equipment is configured to implement a frequency-hopping mechanism among one or more of the first frequency bands.

10. The method for transmitting a discreet signal according to one of the preceding claims, wherein the second piece of transmitting equipment (222) and the radio-resource allocator (202) are part of a multilayer network having a multi-domain and multi-radio-resource-allocator IP service-orchestration architecture via which the second piece of transmitting equipment notifies the resource allocator of its need to transmit the discreet signal in the second step (302) of the method.

11. A radio-resource allocator (120) configured to implement the first four steps (301, 302, 303, 304) of a method for transmitting a discreet signal according to one of the preceding claims.

12. A device for receiving a discreet signal in a communication system, said device being configured to:
- transmit, to a radio-resource allocator (120) according to claim 11, information on a quality of the signals received over at least one communication link involving the satellite,
- receiving, from the radio-resource allocator, at least one first frequency band and one associated power level relative to the transmission of said discreet signal,
- acquiring a radio signal in a frequency band comprising said first frequency band, and
- implementing a successive-interference-cancellation algorithm on the radio signal in order to recover said discreet signal.
